# EUROPEAN PATENT APPLICATION

(11) **EP 2 458 389 A1**
(43) Date of publication of application: **30.05.2012**
(21) Application number: 10192340.7
(22) Date of filing: 24.11.2010
(51) Int. Cl.: G01N 35/10, G01N 35/00

(54) **Detection of incorrect placement of liquid containers**

(71) Applicant: F. Hoffmann-La Roche AG, 4070 Basel (CH); Roche Diagnostics GmbH, 68305 Mannheim (DE)
(72) Inventor: Rauh, Juergen, 5507 Mellingen (CH)
(74) Representative: Poredda, Andreas

(57) **Abstract**

The present invention refers to an error detection system and a method for detecting incorrect placement of liquid containers in receptacles of an analytical system. The present invention also refers to an analytical system comprising an error detection system for detecting incorrect placement of liquid containers. The method comprises the steps of withdrawing an aliquot of liquid from a liquid container being placed in a receptacle, introducing said aliquot of liquid into an electrochemical detection cell and measuring the signal of at least one selected electrolyte present in the liquid, comparing the measured electrolyte signal with a reference signal range typical of a liquid for which that receptacle is intended, detecting the liquid container as incorrectly placed if the measured signal of electrolyte is out of the reference signal range.

## Description

### FIELD OF THE INVENTION

This invention relates to the field of systems for clinical diagnostics and particularly to a method for detecting the incorrect placement of liquid containers in an analytical system.

### BACKGROUND OF THE INVENTION

Various types of tests related to patient diagnosis and therapy can be performed by analysis assays of a patient's fluid sample. Such patient samples are typically placed in sample tubes, extracted from the tubes, combined with various reagents and analyzed. In typical clinical chemical and some immunochemical analyses, one or two assay reagents are added at separate times to a liquid sample, the sample-reagent combination is mixed and incubated within a reaction cuvette. Photometric measurements using a beam of light illuminating the sample-reagent combination are made to ascertain end-point or rate values from which an amount of analyte may be determined using well-known calibration techniques. Examples of such photometric measurements comprise turbidimetric, fluorometric and absorption measurements or the like. Most of the times, clinical chemical systems comprise an electrolyte analyzer, such as an ion selective electrode (ISE) module for the determination of electrolytes such as Sodium, Potassium, and Chloride in the samples.

Electrolyte analyzers typically employ a dedicated set of ISE reagents contained in liquid containers. These ISE reagents comprise for example, ISE calibrators used for the calibration of the ISE module and auxiliary reagents, such as cleaning solutions for cleaning the ion-selective electrodes and maintenance reagents for conditioning electrodes, tubing and sample probes. These ISE reagent containers may differ in shape and content from other reagent containers used e.g. for tests based on photometric measurements, and they may be handled separately and independently if the system is designed to perform both types of measurements.

Particularly, ISE reagents are normally loaded manually into a rack of the system comprising a plurality of receptacles. This operation however, is subject to possible human error. Indeed, if the liquid containers are identical or similar in shape and size, they may be misplaced. It can thus not be ensured that the proper reagent is used at appropriate times for the appropriate purpose, if the operator does not pay special attention during the placement.

A liquid container placed in the wrong receptacle leads to the systematic use of the wrong reagent, which may continue unnoticed with deleterious effects on the reliability of the measurements.

One way for ensuring loading the appropriate liquid container into the appropriate receptacle would be to provide the liquid containers with identification means such as a bar code. However, if the code is read before placing a liquid container into a receptacle, the human error factor remains. If the code is read after the liquid container has been placed into a receptacle, then a bar code reader for each receptacle position would be needed. In another such procedure, the loading of reagents may be automatically accomplished by the system itself, e.g. by means of a transfer device moving the liquid containers from bulk supplies into the appropriate receptacles after identification. While such errors may be reduced using the latter procedure, the bulk supplies and transfer device can take up more room than it is desirable and will increase cost and complexity of the system.

US20040005714A1 discloses an apparatus and method of loading reagent in a specimen handling device, where containers and receptacles are visually marked by sets of icons. Visual matching of icons or colours is however still subject to possible human error.

A more reliable method than visual matching would be that to use shape matching, according to which different liquid containers are designed with different shapes which match complementary shapes of the respective receptacles and are prevented to be placed on a receptacle with different shape. However, it is desirable for manufacturing and cost reasons to employ standard liquid containers rather than customized liquid containers with different shapes.

It is an object of the present invention to provide a reliable method and an error detection system for checking the correct placement of liquid containers in an analytical system, without increasing cost and complexity of the analytical system and/or liquid containers.

This is achieved by the combination of features of the independent claims. Preferred embodiments of the invention are given by the features of the dependent claims.

An advantage of the present invention is the guarantee that the proper reagent is used at appropriate times for the appropriate purpose. A further advantage is that not only an error in the placement of a liquid container can be promptly detected, but the type of error can be also identified. In other words, the error detection system may recognize automatically which liquid container has been incorrectly placed at a certain position. Other advantages of the invention are reduced service costs and trouble-shooting as well as prolonged lifetime of the analyzer.

### DESCRIPTION OF THE INVENTION

The present invention refers to a error detection system and a method for detecting incorrect placement of liquid containers in receptacles of an analytical system. The present invention also refers to a safety-improved analytical system comprising an error detection system with the ability to detect incorrect placement of liquid containers.

An error-detection system according to the invention is an apparatus assisting the user with the detection of misplacements, i.e. errors occurred during placement, of liquid containers in the analytical system. The system further acts on the analytical system by preventing that these errors are propagated and lead to unreliable sample analysis.

An analytical system according to the present invention is an apparatus comprising the above error detection system and further assisting users with the analysis of clinical samples, in other words with the detection, e.g. qualitative and/or quantitative evaluation of samples for diagnostic purpose. Examples of such analytical system are: a clinical chemistry analyzer, a coagulation chemistry analyzer, an immunochemistry analyzer, a urine analyzer. The analytical system may be either as self standing apparatus or a module, e.g. an analytical work cell within a larger system, used to detect the result of chemical or biological reactions or to monitor the progress of chemical or biological reactions. The analytical system may comprise units for the pipetting, dosing, mixing of samples and/or reagents, units for loading and/or unloading and/or transporting and/or storing sample tubes or racks comprising sample tubes, units for loading and/or unloading and/or transporting and/or storing reagent containers or cassettes.

According to a preferred embodiment the analytical system comprises a sample receiving unit, e.g. comprising sample receptacles for receiving sample containers containing samples to be assayed. Samples may be received for example in the form of tubes, e.g. blood collection tubes, or smaller tubes or vessels comprising sample aliquots. Samples may be arranged in single carriers or holders or racks for multiple samples.

According to a preferred embodiment the analytical system further comprises a reagent holding unit, e.g. comprising reagent receptacles for receiving reagent containers containing reagents to perform the assays. Reagents may be arranged for example in the form of containers or cassettes containing individual reagents or group of reagents, placed in appropriate receptacles or positions within a storage compartment or conveyor.

According to a preferred embodiment the analytical system further comprises reaction container receptacles for receiving reaction containers, such as optical cuvettes, for the reaction between samples and reagents.

According to a preferred embodiment the analytical system comprises a liquid processing unit, e.g. a device such as a pipetting unit, to deliver samples and/or reagents to reaction containers. The pipetting unit may comprise a reusable washable needle, e.g. a steel needle, or disposable pipette tips. Typically, the pipetting unit is operatively coupled to an automated positioning device for moving the pipette tip or needle with respect to the device and, e.g., may be mounted to a transfer head that can be moved in two directions of travel in a plane, e.g., by means of guiding rails and a third direction of travel orthogonal to the plane, e.g., by means of a spindle drive.

The analytical system may comprise incubation units for maintaining sample/reagent mixtures at a certain temperature during reaction, wash stations for washing pipette tips or needles, mixing paddles, etc...

According to a preferred embodiment the error detection system of the present invention uses elements of the analytical system. In other words the error detection system is preferably configured to share elements with the analytical system with minimal or no structural modification of the analytical system. The error detection system thus comprises and shares with the analytical system a plurality of receptacles for receiving a plurality of liquid containers. The error detection system further comprises and preferably shares with the analytical system a pipetting unit or other sort of device for withdrawing aliquots of liquids from the liquid containers and an electrochemical detection cell module for measuring the signal of at least one selected electrolyte in the aliquots withdrawn from the liquid containers.

Examples of electrochemical detection cells are coulometric, conductometric or potentiometric measuring devices. According to a preferred embodiment the electrochemical detection cell is an ion selective electrode (ISE) module for the determination of analytes such as Sodium, Potassium, Chloride and Lithium in samples. An ion-selective electrode (ISE) is a transducer or sensor that converts the activity of a specific ion dissolved in a solution into an electrical potential, which can be measured by a voltmeter or pH meter. The voltage is theoretically dependent on the logarithm of the ionic activity, according to the Nernst equation. The measuring part of the electrode is usually made as an ion-selective membrane, along with a reference electrode, which delivers a stable potential against which the measurement electrode's potential is read. Thus the ISE module may comprise an electrode for each analyte or electrolyte which is being determined, e.g. a Sodium-selective electrode, a Potassium-selective electrode, a Chloride-selective electrode and a Lithium-selective electrode. Determination of analytes thus means that a sample (e.g. serum, plasma, or urine) is placed in a sample chamber in contact with the ion selective membrane. A potential develops at this membrane, which under ideal circumstances only depends on the activity of the ion to be measured (the analyte). That potential is derived via a contact pin and read against a stable signal delivered by the reference electrode. This reference electrode is the other half-cell of the measurement circuit. The potential difference measured between the measurement electrode and the reference electrode is related to the concentration of the ion in question employing the Nernst equation as described in textbooks. Each sample measurement typically consists of two separate measurements: the measurement of the sample material itself, and a subsequent one-point calibration. The one-point calibration is the measurement of a one-point calibrator of known concentrations. The results of both, sample and one-point calibration measurement are expressed in mV (millivolts). These results, together with the electrode slope and other parameter determined during the main calibration (e.g. a two-point calibration), are used for the calculation of the final electrolyte concentration in the sample, usually expressed in mmol/L (millimole per liter).

The analytical system may comprise however also a second detection module other than an electrochemical detection cell for detecting at least one selected analyte in the reaction containers. In particular, the analytical system may comprise one or more detection units, comprising a light source illuminating sample fluids and/or reaction mixtures and a detector receiving radiation emitted, transmitted or reflected from said samples or reaction mixtures. In particular, the analytical system may comprise an optical detection unit, which makes it possible to guide light in a controlled manner through a sample, and to measure optical transmission, such as absorbance or scattering, for the optical analysis of analytes present in the sample. The optical detection unit may be however configured to carry out any other spectroscopic measurement, including electrochemiluminescence. It may also entail temporally static measurements, time resolved measurements, or both.

Typically, for ISE determinations a dedicated set of ISE liquids contained in liquid containers is employed. These ISE liquids comprise for example, ISE calibrators used for the calibration, and auxiliary reagents such as cleaning solutions for cleaning the ion-selective electrodes and maintenance reagents for conditioning electrodes, tubing and sample probes.

These ISE liquid containers may differ in shape from other reagent containers used e.g. for tests based on optical measurements, and they may be handled separately and independently if the analytical system is designed to perform both types of measurements. For example, liquid containers of one type may be loaded automatically into appropriate reagent container holding positions, e.g. in a reagent storage module or reagent processing station, where reagent containers may be conveyed and/or brought into alignment with a pipetting position. During this process, the identity and correct placement of reagent containers may be automatically verified, e.g. by identification techniques known in the art such as barcode reading or RFID.

Liquid containers of another type may be loaded manually into receptacles of the analytical system for which the liquids contained in the liquid containers are intended.

Although the error detection system of the present invention may be suitable for detecting the incorrect placement of any liquid container loaded on the analytical system, including those loaded automatically if any, the method is particularly suitable for detecting the incorrect placement of liquid containers in receptacles of the analytical system when the risk of error is higher, e.g. when loaded manually. This is typically the case for ISE liquid containers.

The term "receptacle" indicates a liquid container holding position, which may be either fixed or removably coupled to the analytical system. This may assume for example the form of a dedicated flat surface or recess on a surface or in a rack, conveyor, e.g. rotor conveyor or the like, In general, this is a compartment within a multi-compartment storage area or space, wherein each compartment is intended for a specific liquid and thus for its respective liquid container without physical constraints for different liquid containers. In other words, due to the lack of physical constraints, it may be possible to erroneously place a liquid container in a receptacle intended for another liquid container.

The error detection system of the present invention is thus intended to detect this kind of error or misplacement. In particular, the error detection system is being set up to withdraw with a device, e.g. the pipetting unit an aliquot of liquid from a liquid container being placed in a receptacle. The device may be set up to withdraw an aliquot of liquid directly from a liquid container being placed in a receptacle, e.g. via a tubing or channel connection, e.g. connected to a positive or negative pressure source. The error detection system is further being set up to introduce said aliquot of liquid into the electrochemical detection cell and to measure the signal of at least one electrolyte or analyte present in the liquid. The error detection system may further be set up to introduce an aliquot of calibrator, i.e. an aliquot of liquid with a known concentration of electrolyte into the electrochemical detection cell, and to measure the signal of that electrolyte. The error detection system further comprises a computing unit being set up to compare the measured electrolyte signal with a reference signal range typical of a liquid for which that receptacle is intended. In particular, the computing unit may be set up to calculate the Ratio (R) between the signal of an aliquot of liquid and that of a calibrator (R = Signal Liquid / Signal Calibrator), and to compare the calculated ratio with a reference ratio range typical of a liquid for which that receptacle is intended. The error detection system is further being set up to prevent further operation of the analytical system or to release a warning if the measured electrolyte signal is out of the reference signal range typical of the liquid for which that receptacle is intended, and in particular if the calculated ratio R is out of the reference ratio range.

Reference to a ratio range is necessary as the actual value may vary according to certain parameters such as age and condition of the ion selective electrode, accuracy of the calibration, which in turn depends on age and condition of the calibration solution(s), etc... The range depends of course also on the concentration of the reference electrolyte solution used, which may be different for different analytical systems.

A computing unit is a device embodied as one or more programmable control computers or control units running one or more computer-readable programs provided with instructions to perform operations in accord with a process operation plan. The computing unit comprises functional entities such as at least a memory for storing at least reference signal ranges to be compared with the measured signals and a microprocessor for carrying out the comparison. The computing unit may also perform several other tasks and/or be connected to another computing unit performing other tasks. Also several control units, each dedicated to a set of tasks may be integrated with or connected to the analytical system, e.g. to control specific components. The functional entities may be directly integrated in the analytical system or coupled to it, e.g. by electrical connection. In other words, the computing unit may comprise a computer electrically connected to the analytical system and/or one or more control units integrated with the analytical system. The computing unit receives information from the different elements of the error detection system and generates and transmits corresponding control signals for controlling the elements according to the process operation plan. The computing unit may be connected to the error detection system elements via one or more data connections, e.g., by use of a wired or wireless network.

The computing unit may generate control signals for coordinating movements of the error detection system elements and/or of the elements of the analytical system, such as the movement of the pipetting unit. The computing unit may particularly be configured to interrupt or prevent further operation of the analytical system or release a warning if the measured electrolyte signal is out of the reference signal range typical of the liquid for which the receptacle is intended, i.e. if at least one liquid container has been detected as incorrectly placed.

The computing unit may be configured to generate, based on a result of the determination if a liquid container has been incorrectly placed in a receptacle, control signals, which are supplied to a signalizing device, e.g. a display, to generate a user-identifiable message, so that a user may be informed about misplaced liquid containers. The message may, for instance, contain information for guiding a user to correct the misplacement so that the right liquid container is placed in the appropriate receptacle. Specifically, the computing unit may be configured to control a display in a manner to display a (e.g. schematic) representation of one or more parts of the error detection system in order to visualize the receptacles and/or liquid containers. More specifically, the control computer may, e.g., be configured to control the display in a manner to display a mismatch (difference) between liquid containers actually present and liquid containers required in that receptacle.

Further, the computing unit may be configured to confirm the correct placement of a liquid container and/or all liquid containers in the respective receptacles and instruct the analytical system to proceed with routine analysis of samples according to an operation plan.

The present invention is also directed to a method for detecting incorrect placement of liquid containers in receptacles of an analytical system, the method comprising the step of withdrawing an aliquot of liquid from a liquid container being placed in a receptacle. The method further comprises the step of introducing said aliquot of liquid into an electrochemical detection cell and measuring the signal of at least one selected electrolyte present in the liquid.

The method further comprises the step of comparing the measured electrolyte signal with a reference signal range typical of a liquid for which that receptacle is intended. In particular, the method may comprise the steps of introducing a calibrator into the electrochemical detection cell and measuring the signal of the same selected electrolyte present in the calibrator, calculating the ratio (R) between the measured electrolyte signal for the liquid and the measured electrolyte signal for the calibrator, comparing the calculated ratio (R) with a reference ratio range typical of a liquid for which that receptacle is intended.

A "calibrator" is a liquid comprising a known concentration of electrolyte or electrolytes and thus providing a reference signal when compared to the signal measured for a liquid, in which the concentration of the same electrolyte is unknown or needs to be verified, provided that the same ion-selective electrode is used for both measurements.

This is done to ensure that the comparison leads to the correct identification of the liquid containers even in case of system drifts or offsets. Such drifts and offsets are compensated by comparing ratios instead of absolute electrolyte signals.

The method further comprises the step of detecting the liquid container as incorrectly placed if the measured electrolyte signal is out of the reference signal range and in particular if the ratio R is out of the reference ratio range.

Withdrawing an "aliquot" refers to a small quantity of liquid, typically below 1 mL (millilitre), which can be introduced into the electrochemical detection cell and which is sufficient for obtaining a measurement of an electrical signal correlated to an electrolyte. Measuring an electrical signal here means measuring preferably an electric potential, expressed in mV.

The step of measuring an electrical signal is similar to the step of determining an electrolyte concentration in a sample, although the liquid here is other than a sample. Also, unlike for a sample, it is sufficient to just measure the electrical potential of a liquid contained in a liquid container. It is not necessary to calculate a concentration, e.g. with reference to a calibration slope. Also there is no need for an accurate measurement, which would require the electrochemical detection cell to be prepared, e.g. cleaned, before the next measurement. The liquid is preferably introduced in the electrochemical detection cell such as it is withdrawn from the liquid container, which means without pre-treatment, e.g. without being mixed with other liquids or diluted. Thus, according to a preferred embodiment an undiluted aliquot of liquid is introduced into the electrochemical detection cell and the electrical potential measured, e.g. by an ion selective electrode, e.g. by a sodium-selective electrode if sodium is the selected electrolyte.

A calibrator with a known concentration of electrolyte, e.g. sodium, may be used, i.e. introduced in the electrochemical detection cell, and it's signal measured, e.g. by the Sodium-selective electrode. Normally, in ISE measurements, concentrations are calculated using the signal of the sample to be measured, the signal of one or more calibrators, and various calibration parameters. In this context, however, the concentration does not need to be determined. It is sufficient to calculate a ratio R of the electrochemical signals for both liquid and calibrator according to R = signal of liquid [mV] / signal of calibrator [mV], here described for sodium.

The next step is that to compare the ratio R, e.g. the one determined for Sodium, with a stored reference ratio range typical of a liquid, i.e. of the same electrolyte type contained in a liquid, for which that receptacle is intended. The computing unit is being set up to make such a comparison and determine whether the calculated ratio is within or out of the reference range. For each liquid container for which a receptacle is intended, i.e. for each receptacle, there is thus a reference ratio range typical of the liquid contained in a liquid container for which that receptacle is intended, in other words that is supposed to be placed in that receptacle. Thus depending on the type of liquid containers, it is important or at least preferable to choose an ion selective electrode, e.g. for sodium, which generates an electrical signal in a different, preferably non-overlapping, range for each liquid in a given liquid container. The computing unit may be also set up to select an electrode according to the liquid container type.

In this way the incorrect placement of a liquid container in a receptacle may be promptly detected if the measured signal of electrolyte or signal ratio is out of the reference signal range.

According to a preferred embodiment the process is repeated for other receptacles as necessary.

According to a preferred embodiment the electrolyte signal measured for one liquid container is compared with reference signal ranges typical of liquids for which different receptacles are intended until a reference signal range comprising the measured electrolyte signal is identified. This comparison may comprise the step of comparing the calculated ratio (R) between the measured electrolyte signal for the liquid and that for a calibrator with reference ratio ranges typical of liquids for which different receptacles are intended until a reference range comprising the calculated ratio (R) is identified.

Thus the computing unit may be set up to make a comparison between the measured electrolyte signal and any other of a series of stored reference signals as necessary. In this way, not only an incorrect placement can be detected but also the identity of the liquid container being incorrectly placed in a certain receptacle.

Also, the computing unit may be set up to select in which sequence the placement of liquid containers in receptacles is being tested, depending e.g. on the typical reference range, e.g. in a decreasing or increasing order of electrical signal range. The advantage of doing so may be time optimization and/or reduction of contamination from the previous measurement, especially if liquids are introduced into the electrochemical detection cell one after another without intermediate cleaning.

Other and further objects, features and advantages of the invention will appear from the following description and accompanying drawings, which illustrate preferred embodiments and serve to explain the principles of the invention more in detail.

### BRIEF DESCRIPTION OF THE DRAWINGS

FIG. 1 depicts schematically and not to scale an analytical system comprising an error detection system for detecting incorrect placement of liquid containers in receptacles of an analytical system.
FIG. 2 provides an example of algorithm for detecting incorrect placement of liquid containers in receptacles of an analytical system.

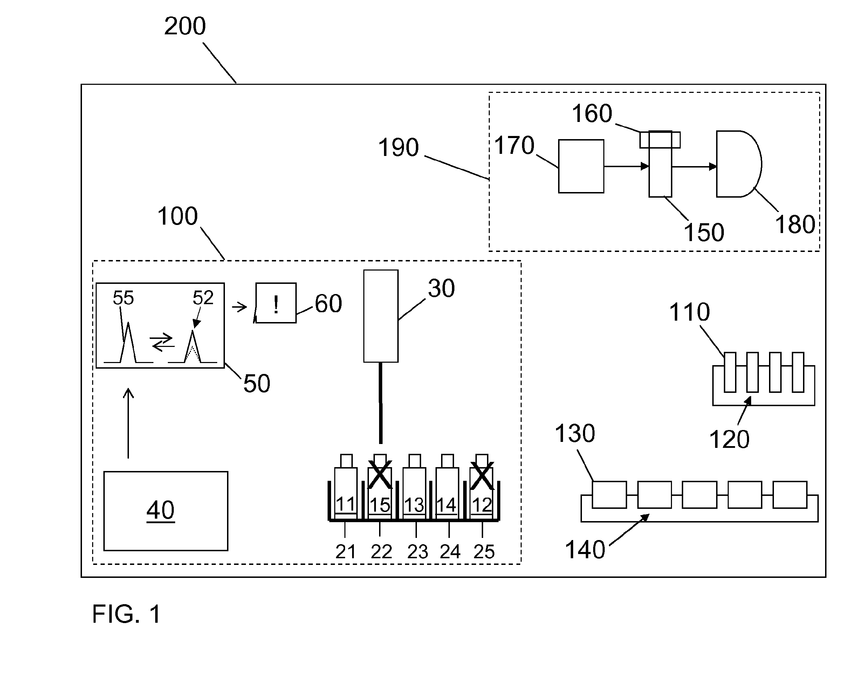

FIG. 1 is a schematic representation of an analytical system 200 for the analysis of clinical samples comprising an error detection system 100 for detecting incorrect placement of liquid containers 12,15 in receptacles 22,25 of the analytical system 200. The error detection system 100 comprises a plurality of receptacles 21,22,23,24,25 for receiving a plurality of liquid containers 11,12,13,14,15. In particular, the liquid containers 11,12,13,14,15 are intended for the receptacles 21,22,23,24,25 respectively. Although five receptacles and five liquid containers are shown for simplicity, the invention is not limited to this number. The error detection system 100 further comprises a pipetting unit 30 for withdrawing aliquots of liquids from the liquid containers 11,12,13,14,15 and an electrochemical detection cell module 40 for measuring the signal of at least one selected electrolyte in the aliquots withdrawn from the liquid containers 11,12,13,14,15. In particular the error detection system 100 is being set up to withdraw with the pipetting unit 30 an aliquot of liquid from a liquid container 11,12,13,14,15 being placed in a receptacle 21,22,23,24,25, to introduce said aliquot of liquid into the electrochemical detection cell 40 and to measure the signal of at least one selected electrolyte present in the liquid. The electrochemical detection cell 40 is in this case an ISE module.

In the example of Figure 1, the liquid containers 12 and 15 have been misplaced. The liquid container 15 which was intended for the receptacle 25 was incorrectly placed in the receptacle 22 intended for liquid container 12 and vice versa. An X on the liquid containers 12 and 15 indicates the incorrect placement. The error detection system further comprises a computing unit 50 set up to compare the measured electrolyte signal with a reference signal range typical of a liquid, for which the receptacle is intended. In this example, the pipetting unit 30 withdraws an undiluted aliquot of liquid in correspondence to receptacle 22 and a signal 55 for an electrolyte is measured after introducing the aliquot in the electrochemical detection cell 40. The computing unit 50 compares then this measured signal 55 with a reference signal range 52 typical of a liquid contained in a liquid container 12 for which receptacle 22 is intended and detects that the measured electrolyte signal 55 is out of said reference signal range 52. The error detection system 100 is further set up to release a warning 60 and/or prevent further operation of the analytical system.

The analytical system 200 further comprises sample receptacles 120 for receiving sample containers 110 and reagent receptacles 140 for receiving reagent containers 130. In this specific embodiment, reagent containers are handled separately from liquid containers 11,12,13,14,15. In particular, reagent containers 130 are handled automatically while liquid containers 11,12,13,14,15 are handled manually. Thus, although, the error detection system 100 could be used in principle to detect the incorrect placement of reagent container 130 as well, it is configured to detect the incorrect placement only of liquid containers 11,12,13,14,15.

The analytical system 200 further comprises reaction container receptacles 160 for receiving reaction containers 150 for the reaction between samples and reagents and a second detection module 190 other than an electrochemical detection cell 40 for detecting at least one selected analyte in the reaction containers. The second detection module 190 is an optical detection unit, comprising a light source 170 illuminating sample fluids and/or reaction mixtures being located in a reaction container 150 such as an optical cuvette and a detector 180 receiving radiation emitted, transmitted or reflected from said samples or reaction mixtures, such as in an absorbance or scattering assay.

Further the ISE module 40 is used not only to detect the incorrect placement of liquid containers 11,12,13,14,15 but also for the determination of analytes such as Sodium, Potassium, Chloride and Lithium in samples contained in sample containers 110 when this type of analysis is required. Thus the ISE module 40 comprises a Sodium-selective electrode, a Potassium-selective electrode, a Chloride-selective electrode and a Lithium-selective electrode (not shown), for the determination of respective electrolytes. Of these, one electrode, preferably the Sodium-selective electrode is selected, i.e. used, also for detecting the incorrect placement of liquid containers 11,12,13,14,15.

The next non limiting examples are based on five liquid containers 11,12,13,14,15 containing respective different liquids called SOL1, SOL2, DEP, ET, ACT, wherein SOL1 stands for ISE Solution 1, SOL2 stands for ISE Solution 2, DEP stands for ISE Deproteinizer, ET stands for ISE Etcher and ACT stands for Activator. In particular, SOL1 and SOL2 are solutions containing different concentrations of electrolytes used for the calibration of the ISE module. The ISE Deproteinizer and ISE Etcher are auxiliary reagents for cleaning the ion-selective electrodes of the ISE module. The Activator is an auxiliary maintenance reagent required during the daily service tasks for the conditioning of the ISE electrodes, tubing and sample probes. More specifically, SOL1 is a solution comprising 150 mmol/L Sodium, 5 mmol/L Potassium, 115 mmol/L Chloride, 0.3 mmol/L Lithium. SOL2 is a solution comprising 110 mmol/L Sodium, 1.8 mmol/L Potassium, 72 mmol/L Chloride, 0.3 mmol/L Lithium. DEP comprises 1.2% Sodium Hypochlorite (NaOCl). ET comprises 100 mmol/L Ammonium Hydrogen Difluoride [(NH4)HF2]. ACT comprises human serum.

If Sodium is selected as the electrolyte to be measured for detecting the incorrect placement of SOL1, SOL2, DEP, ET and ACT liquid containers and a reference electrolyte solution comprising e.g. 3.5 M Potassium Chloride (KCl) is used, the measured signal for Sodium electrolyte, expressed in mV, for each undiluted liquid is divided by the signal being measured for a calibrator to give a ratio R_{Na.}. In particular: the typical reference Sodium electrolyte ratio range of SOL1 is 1.45<R_{Na}<1.7. The typical reference Sodium electrolyte ratio range of SOL2 is 1.2<R_{Na}<1.45. The typical reference Sodium electrolyte ratio range of DEP is R_{Na}>1.8. The typical reference Sodium electrolyte ratio range of ET is R_{Na}<0.7. The typical reference Sodium electrolyte ratio range of ACT is 0.85<R_{Na}<0.99.

According to one embodiment the method of the present invention comprises the step of providing a plurality of calibration receptacles 21,22 intended for a plurality of calibration liquid containers 11,12 respectively and/or providing a plurality of auxiliary receptacles 23,24,25 intended for a plurality of auxiliary liquid containers 13,14,15 respectively.

According to one embodiment the method of the present invention comprises the step of providing a first calibration receptacle 21 for a first calibration liquid container 11 and a second calibration receptacle 22 for a second calibration liquid container 12, and/or providing a first auxiliary receptacle 23 for an Etcher liquid container 13, a second auxiliary receptacle 24 for a deproteinizer liquid container 14 and a third auxiliary receptacle 25 for an Activator liquid container 15.

According to one embodiment the method of the present invention comprises the step of selecting any of the receptacles 21,22,23,24,25 chosen from the group of first and second calibration receptacle 21,22, first, second and third auxiliary receptacles 23,24,25, and withdrawing an aliquot of liquid from the liquid container being placed in that selected receptacle 21,22,23,24,25. The method further comprises the step of introducing said aliquot of liquid into the electrochemical detection cell 40 and measuring the signal of Sodium electrolyte present in the liquid. The method further comprises the step of comparing the measured Sodium electrolyte signal with a reference Sodium signal range typical of the liquid for which that receptacle 21,22,23,24,25 is intended. More particularly, the method comprises the step of calculating the ratio R_{Na} between the signal of Sodium electrolyte present in the liquid and the signal of a calibrator and comparing the ratio R_{Na} with a reference ratio range ratio R_{Na} typical of the liquid for which that receptacle 21,22,23,24,25 is intended.

According to one embodiment the error detection system is configured to select the receptacles 21,22,23,24,25 in the following or reverse order:
a) second auxiliary receptacle 24 intended for a DEP liquid container 14,
b) first calibration receptacle 21 intended for a SOL1 liquid container 11,
c) second calibration receptacle 22 intended for a SOL2 liquid container 12,
d) third auxiliary receptacle 25 intended for an ACT liquid container 15,
e) first auxiliary receptacle 23 intended for an ET liquid container 13.

According to one embodiment the method comprises the step of confirming correct placement of a liquid container 11,13,14 in that selected receptacle 21,23,24 if R_{Na} is comprised in the range typical of the liquid for which that receptacle 21,23,24 is intended.

According to one embodiment the method comprises the step of detecting and/or flagging a liquid container 12, 15 as incorrectly placed if R_{Na} is out of the range typical of the liquid for which that receptacle 22, 25 is intended. According to one embodiment, if a liquid container 12 has been detected and/or flagged as incorrectly placed, the method further comprises the step of comparing R_{Na} with any of the reference ranges typical of the other liquids contained in the other liquid containers 11,13,14,15 to which other receptacles 21,23,24,25 other than the selected receptacle 22 have been assigned until a reference range in which R_{Na} is comprised is identified.

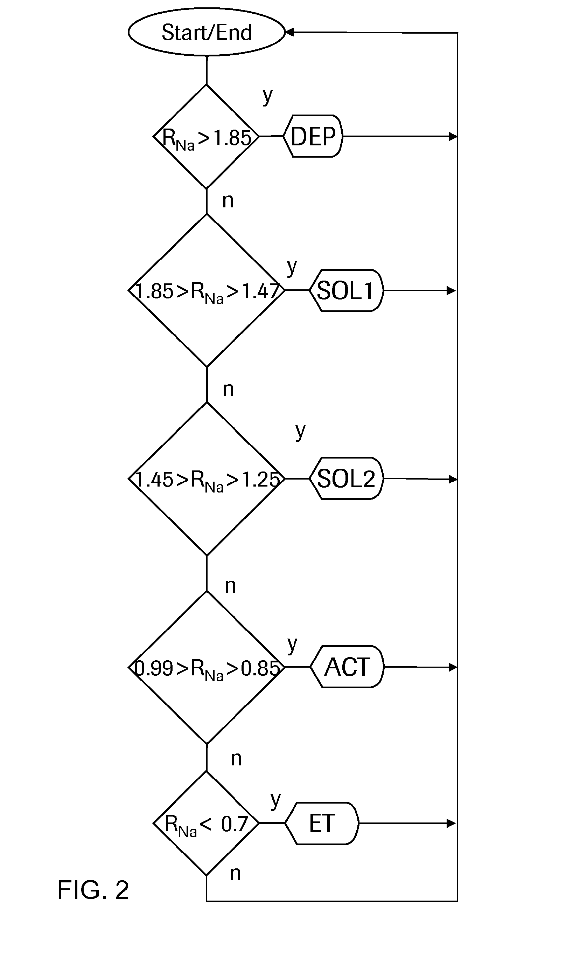

FIG. 2 provides an example of algorithm for detecting incorrect placement of liquid containers in receptacles of an analytical system. The abbreviations "y" and "n" stand for "YES" and "NO" respectively to indicate different options in the affirmative or negative answer.

At START, e.g. at start of the analytical system 200 and/or at start of the ISE module 40, or any time new liquid containers are loaded into the analytical system 200 and preferably before any sample is being analyzed, the error detection system 100 is configured to check whether the ISE liquid containers SOL1, SOL2, ET, DEP and ACT have been correctly placed in their respective receptacles 21,22,23,24,25 and particularly to detect any incorrect placement.

As first step in this example, the 100 is configured to check the correct placement of the DEP liquid container 14 in the receptacle 24, for which DEP is intended. If R_{Na} is comprised in the reference range typical of DEP, then correct placement of DEP is confirmed. If R_{Na} is out of the Sodium reference range typical of DEP, the liquid container in the receptacle 24 is flagged as incorrectly placed. At this point the error detection system 100 may be configured to proceed to another receptacle 21,22,23,25 to check whether other incorrect placements have occurred. However, in this case, the error detection system 100 is configured to detect the identity of the liquid container 11,12,13,15 which has been incorrectly placed in that receptacle 24. Thus, if the first comparison is negative, the error detection system 100 is configured to compare with the computing unit 50 R_{Na} with any of the reference ranges typical of the other liquids contained in the other liquid containers 11,12,13,15, for which the other receptacles 21,22,23,25 are intended until a reference range in which R_{Na} is comprised is identified, i.e. until the comparison is affirmative. In this example the comparison proceeds in the following order: if R_{Na} is out of the reference range typical of DEP, then R_{Na} is compared with the reference range typical of SOL1, then with the reference range typical of SOL2, then with the reference range typical of ACT and finally with the reference range typical of ACT. The process ends for one receptacle when the liquid container placed in that receptacle is identified, i.e. when the answer to a comparison is affirmative. In an extreme case, the process ends when the answer to all comparisons is negative, indicating that not only an incorrect placement occurred but that an incorrect liquid container was loaded in the analytical system. The process is then repeated for another receptacle until correct placement of the liquid container is confirmed or identity of the incorrectly placed liquid container is detected. Steps may be skipped as the process continues, e.g. to exclude comparisons with ranges typical of liquid containers, which have been already identified in the previous steps. The error detection system may thus be configured to react accordingly automatically, including e.g. changing the order of comparison, in order to optimize the process.

In particular, the error detection system may be configured to detect errors during the normal operation of the analytical system, e.g. by checking the identity of a liquid container when the liquid is being used. For example, the identity of DEP and ET may be checked during cleaning the ion-selective electrodes of the ISE module while the identity of ACT may be checked during conditioning of the ISE electrodes.

Obviously many modifications and variations of the present invention are possible in light of the above description. It is therefore to be understood, that within the scope of appended claims, the invention may be practiced otherwise than as specifically devised.

## Claims

1. Method for detecting incorrect placement of liquid containers in receptacles of an analytical system, the method comprising the following steps
a) withdrawing an aliquot of liquid from a liquid container being placed in a receptacle,
b) introducing said aliquot of liquid into an electrochemical detection cell and measuring the signal of at least one selected electrolyte present in the liquid,
c) comparing the measured electrolyte signal with a reference signal range typical of a liquid for which that receptacle is intended,
d) detecting the liquid container as incorrectly placed if the measured signal of electrolyte is out of the reference signal range.

2. Method according to claim 1 comprising the steps of
e) introducing a calibrator into the electrochemical detection cell and measuring the signal of the same selected electrolyte present in the calibrator,
f) calculating the ratio (R) between the measured electrolyte signal for the liquid and the measured electrolyte signal for the calibrator,
g) comparing the calculated ratio (R) with a reference ratio range typical of a liquid for which that receptacle is intended.

3. Method according to claim 1 or 2 comprising the step of repeating steps a) to d) or a) to g for another receptacle.

4. Method according to any of the preceding claims comprising the step of providing a plurality of calibration receptacles intended for a plurality of calibration liquid containers respectively and/or providing a plurality of auxiliary receptacles intended for a plurality of auxiliary liquid containers.

5. Method according to any of the preceding claims comprising the step of
- providing a first calibration receptacle intended for a first calibration liquid container and a second calibration receptacle intended for a second calibration liquid container, and/or
- providing a first auxiliary receptacle intended for an Etcher liquid container, a second auxiliary receptacle intended for a deproteinizer liquid container and a third auxiliary receptacle intended for an Activator liquid container.

6. Method according to any of the preceding claims comprising the step of introducing an undiluted aliquot of liquid into the electrochemical detection cell.

7. Method according to any of the preceding claims comprising the step of measuring the signal of Sodium electrolyte present in the liquid.

8. Method according to any of the preceding claims comprising the step of comparing the measured electrolyte signal with reference signal ranges typical of liquids for which different receptacles are intended until a reference signal range comprising the measured electrolyte signal is identified or comparing the calculated ratio (R) between the measured electrolyte signal for the liquid and that for a calibrator with reference ratio ranges typical of liquids for which different receptacles are intended until a reference range comprising the calculated ratio (R) is identified.

9. Method according to any of the claims 5 to 8 comprising the following steps
a) selecting any of the receptacles chosen from the group of first and second calibration receptacle, first, second and third auxiliary receptacles, and withdrawing an aliquot of liquid from the liquid container being placed in that selected receptacle,
b) introducing said aliquot of liquid into the electrochemical detection cell and measuring the signal of Sodium electrolyte present in the liquid,
c) introducing a calibrator into the electrochemical detection cell, and measuring the signal of Sodium electrolyte present in the calibrator,
d) calculating a ratio (R_{NA}) by dividing the signal measured in step b) with the one measured in step c),
e) comparing the calculated Sodium ratio R_{NA} with a reference Sodium ratio range typical of the liquid for which that receptacle is intended.

10. Method according to claim 9 comprising the step of confirming correct placement of the liquid container in that selected receptacle if the calculated ratio (R_{NA}) is comprised in the reference ratio range typical of the liquid for which that receptacle is intended.

11. Method according to claim 9 comprising the step of flagging the liquid container as incorrectly placed if the calculated ratio (R_{NA})is out of the reference ratio range typical of the liquid for which that receptacle is intended and comparing the calculated ratio (R_{NA}) with any of the reference ratio ranges typical of the other liquids contained in the other liquid containers for which other receptacles other than the selected receptacle are intended until a reference ratio range in which the calculated ratio (R_{NA}) is comprised is identified.

12. Method according to any of the preceding claims comprising the steps of interrupting or preventing further operation of the analytical system if at least one liquid container has been detected as incorrectly placed.

13. Error detection system for detecting incorrect placement of liquid containers in receptacles of an analytical system, the error detection system comprising
- a plurality of receptacles for receiving a plurality of liquid containers,
- a device for withdrawing aliquots of liquids from the liquid containers,
- an electrochemical detection cell module for measuring the signal of at least one selected electrolyte in the aliquots withdrawn from the liquid containers,
and wherein the error detection system is being set up to
- withdraw with the device an aliquot of liquid from a liquid container being placed in a receptacle,
- introduce said aliquot of liquid into the electrochemical detection cell and to measure the signal of at least one selected electrolyte present in the liquid,
- compare with a computing unit of the error detection system the measured electrolyte signal with a reference signal range typical of a liquid for which the receptacle is intended,
- prevent further operation of the analytical system or release a warning if the measured electrolyte ratio is out of the reference ratio range typical of the liquid for which the receptacle is intended.

14. Error detection system according to claim 13 comprising a signaling device to generate a user-identifiable message, so that a user may be informed about misplaced liquid containers.

15. Analytical system for the analysis of clinical samples comprising
- the error detection system according to claim 13 or 14.
